## Europäisches Patentamt

## European Patent Office

## Office européen des brevets

(11) Veröffentlichungsnummer: **0 081 796**
**B1**

(12) **EUROPÄISCHE PATENTSCHRIFT**

(45) Veröffentlichungstag der Patentschrift:
18.05.88

(51) Int. Cl.⁴: **F 42 B 8/00,** F 42 B 5/30

(21) Anmeldenummer: **82111319.8**

(22) Anmeldetag: **07.12.82**

(54) **Patronen oder deren Elemente aus Polyäthylen.**

(30) Priorität: **11.12.81 DE 3149145**

(43) Veröffentlichungstag der Anmeldung:
**22.06.83 Patentblatt 83/25**

(45) Bekanntmachung des Hinweises auf die Patenterteilung:
**18.05.88 Patentblatt 88/20**

(84) Benannte Vertragsstaaten:
**AT BE DE FR IT NL SE**

(56) Entgegenhaltungen:
**BE-A-650 137**
**DE-B-1 130 153**
**US-A-2 904 480**
**US-A-3 102 303**

(73) Patentinhaber: **Dynamit Nobel Aktiengesellschaft,**
**Postfach 12 61, D-5210 Troisdorf (DE)**

(72) Erfinder: **Ballreich, Kurt, Dr., Hersbruckerstrasse
10, D-8500 Nürnberg (DE)**
Erfinder: **Homburg, Axel, Dr., Lotzingerstrasse 21,
D-6204 Taunusstein (DE)**
Erfinder: **Rammensee, Horst, Dr.,
Emskirchenerstrasse 2, D-8500 Nürnberg (DE)**
Erfinder: **Umbach, Hans, Th. Heuss- Strasse 20,
D-8510 Fürth (DE)**

EP 0 081 796 B1

LIBER, STOCKHOLM 1988

## Beschreibung

Die Erfindung betrifft Patronen oder deren Elemente, insbesondere Übungspatronen, aus vernetztem Polyäthylen wie sie beispielsweise in BE-A-650 137 beschrieben sind und ein Verfahren zu deren Herstellung.

Übungspatronen aus Kunststoff, wie sie z. B. in der DE-B-10 16 162 und DE-B-11 146 785 beschrieben sind, werden vorwiegend aus Polyäthylen hergestellt. Durch die Herstellung aus Polyäthylen ergibt sich der Vorteil guter Schockfestigkeiten im Temperaturbereich von +70 bis -20°C, in Ausnahmefällen bis -40°C. Bei Verwendung in automatischen Waffen mit hoher Feuergeschwindigkeit ergibt sich jedoch der Nachteil, daß sich der Lauf bzw. das Patronenlager auf über 130°C erwärmt, d.h. auf eine Temperatur, bei der Polyäthylen zum Schmelzen kommt.

Wird bei einer solchen auf hohe Temperaturen erhitzten Waffe die Schußfolge unterbrochen und eine nicht abgeschossene Patrone bleibt im Patronenlager, so entstehen durch abschmelzende Teile in der Waffe Verunreinigungen, die zur Störung bzw. Beschädigung und zum Ausfall der Waffe führen können.

Seit mehreren Jahren wurden Bemühungen unternommen, diese Nachteile zu vermeiden, ohne die bisherigen Vorteile einzubüßen. Es war naheliegend, wärmebeständigere Kunststoffe zu verwenden. Versuche auf breiter Basis zeigten jedoch, daß alle als Werkstoffe verwendbaren Kunststoffe entweder die genannten Temperaturen nicht aushalten, d.h. bei hohen Temperaturen schmelzen oder sich zersetzen, oder bei Temperaturen unterhalb 20°C und besonders unterhalb -20°C nicht die erforderliche Schockfestigkeit aufweisen, so daß sich entweder Risse in der Patrone ergeben oder der Hülsenboden bzw. die Geschoßnachbildung abgesprengt werden.

Weitere Versuche mit durch Peroxide vernetztem Polyäthylen, wie sie beispielsweise in der BE-A-650 137 beschrieben sind, ergaben zwar eine verbesserte Temperaturbeständigkeit (bis 70°C soll die Festigkeit und Formbeständigkeit erhalten bleiben), jedoch neben wirtschaftlichen Nachteilen durch längeren Spritzzyklus, vor allem erhebliche technische Schwierigkeiten beim Entformen der Hülsen und große Ungleichmäßigkeiten der spritzgegossenen Formkörper. Wie eine kurzzeitige Temperaturbeständigkeit von über 240°C erzielt werden könnte, eine Temperatur, die weit über dem Schmelzpunkt des Polyäthylens liegt, ist dieser Schrift nicht zu entnehmen.

In der US-A-2 904 480 wird Polyäthylen durch energiereiche Strahlen vernetzt, um ein klares, durchsichtiges Produkt zu erhalten, das auch eine erhöhte Festigkeit und Zähigkeit aufweist. Die Bestrahlung erfolgt vorzugsweise in einer Inertgasatmosphäre oder im Vakuum. Daß bei Patronen oder deren Elementen auch eine Vernetzung mit energiereichen Strahlen möglich sein könnte, die die Klebrigkeit solcher Teile bei Temperaturen bei 240°C beseitigen, ist dieser Schrift nicht zu entnehmen.

Die DE-B-1 130 153 befaßt sich mit einem Verfahren, das die Entformung von weichen Kunststoff-Spritzgußteilen aus Spritzformen mit Hinterschneidungen ermöglichen soll. Um dies zu erreichen, wird das entsprechende Kunststoffteil schon in der Spritzform teilweise vorvernetzt, jedoch nur soweit, daß es noch sine solche Elastizität besitzt, daß die Entformung unter Ausnützung des elastischen Verhaltens des Kunststoffteils erfolgen kann. Nach der Entformung wird dieses Teil von einer weiteren Behandlung, beispielsweise durch Bestrahlung mit Röntgen- oder Elektronenstrahlen, unterworfen, die eine weitere Vernetzung und Härtung des Materials bewirkt. Auch dieser Schrift ist nicht zu entnehmen, daß durch die Behandlunng mit energiereichen Strahlen die Klebeneigung von Polyethylen bei Kontakt mit heißen Metallflächen reduziert werden kann.

Die US-A-3 102 303 befaßt sich mit der Bestrahlung von Polyäthylen schlechthin, mit dem Ziel, die Zugfestigkeit von Plastikrohren sowohl bei Raumtemperaturen als auch bei erhöhten Temperaturen in der Größenordnung von 150°C zu erhöhen. Weiterhin soll die Widerstandsfähigkeit gegenüber Chemikalien sowie die Resistenz gegen Spannungsrisse erhöht werden und das Wiederaufschmelzen zur erneuten Verwendung des Kunststoffs verhindert werden. Wie das Ankleben von Patronen oder deren Teilen aus Polyäthylen an der Wandung des Patronenlagers einer heißgeschossenen Waffe verhindert werden könnte, ist dieser Schrift nicht zu entnehmen.

Es ist allgemein bekannt, daß die Vernetzung Hochpolymeren oberhalb ihrer Glas- bzw. Schmelztemperatur gummielastische Eigenschaften verleiht; jedoch kann damit nichts über das Klebeverhalten von Polyäthylen bei Temperaturbeanspruchungen, wie sie im heißgeschossenen Patronenlager einer automatischen Waffe auftreten, ausgesagt werden. Jeder Gummi ist trotz seiner "gummielastischen" Eigenschaften bei entsprechender Temperaturbeanspruchung klebrig.

Da sich bisher keine befriedigende Lösung auf der Basis eines Kunststoffmaterials ergab, wurden trotz der höheren Kosten, des höheren Gewichts und weiterer Nachteile vermehrt wieder Patronen aus Metall auch für Übungszwecke eingesetzt.

Es hat sich gezeigt, daß die bestehenden Schwierigkeiten durch vernetztes Polyäthylen gelöst werden können, wenn die Vernetzung durch energiereiche Strahlen, vorzugsweise Elektronenstrahlen, erfolgt.

Gegenstand der Erfindung sind daher Patronen oder deren Elemente, insbesondere Übungspatronen aus vernetztem Polyäthylen, bei denen nach Anspruch 1 das Polyäthylen mit energiereichen Strahlen, vorzugsweise Elektronenstrahlen, vernetzt ist. Als Elemente werden insbesondere die Hülse und Teile derselben verstanden.

Überraschend erwies es sich, daß strahlenvernetztes Polyäthylen im heißen Patronenlager nicht schmilzt und daß weiterhin die Schockfestigkeit auch bei Temperaturen im Bereich von -20°C allen gestellten Anforderungen genügt.

Mit besonderem Vorteil wird hiervon bei Übungsmunition Gebrauch gemacht, jedoch kann grundsätzlich auch scharfe Munition aus strahlenvernetztem Polyäthylen hergestellt werden.

Es ergibt sich der Vorteil, daß die Hülsen insbesondere der Übungspatronen wie in bisheriger Weise aus Polyäthylen durch Spritzgießen oder dgl. hergestellt werden können, so daß die Fertigungsanlagen weiter benutzbar sind, und daß der fertige Formkörper anschließend mit energiereichen Strahlen ausreichend vernetzbar ist.

Weiterer Gegenstand der Erfindung ist daher entsprechend Anspruch 2 ein Verfahren zur Herstellung der erfindungsgemäßen Patronen oder ihrer Elemente.

Sehr gut geeignet sind Elektronenstrahlen, die mit mehr als 1 Mio. Volt, vorzugsweise 3 bis 10 Mio. Volt, beschleunigt wurden und die eine Dosisleistung von mehr als 1 Mrad pro Minute, vorzugsweise 10 bis 1000 Mrad pro Minute, erzeugen.

Andere hochenergetische Strahlungsarten wie Gamma- und Alpha-Strahlen sind zwar auch anwendbar, aber nicht so gut geeignet, da sie wegen der geringeren realisierbaren Dosisraten eine wesentlich längere Bestrahlungszeit für den gleichen Vernetzungsgrad erfordern.

Die Vernetzung der Übungspatronen besonders mit energiereichen Elektronenstrahlen hoher Dosisleistung hat unerwartet den Vorteil, daß keine Schädigung durch Luftsauerstoff erfolgt, obwohl Luftsauerstoff bei der Strahlenvernetzung nicht ferngehalten wird.

Die Vernetzung ist nicht nur ein Oberflächeneffekt, sondern erstreckt sich praktisch gleichmäßig über die gesamte Patronenhülse. Der Grad der Vernetzung sollte zwischen 40 und 90 %, vorzugsweise zwischen 60 und 75 %, liegen. Der Vernetzungsgrad kann bestimmt werden, indem das vernetzte Polyäthylen zerspant und eine Menge von z. B. 0,5 g in eine metallische Hülse eingebracht wird, die mit Öffnungen versehen ist und in einen Behälter Xylol eingesetzt wird. Die Probe wird dann 14 h unter Normaldruck im Xylol gekocht. Der nicht vernetzte Anteil der Probe geht in Lösung. Die vernetzte Matrix bleibt ungelöst in der Hülse zurück und kann nach Trocknen zurückgewogen werden. Der Vernetzungsgrad in % ergibt sich aus dem Quotienten Auswaage/Einwaage mal 100.

Das für die erfindungsgemäße Patrone verwendete unvernetzte Polyäthylen hat vorzugsweise ein Molekulargewicht zwischen 80 000 und 120 000. Die Molekulargewichtsverteilung sollte möglichst eng sein und die Dichte sollte vorzugsweise über 0,94 g/cm$^3$ liegen.

Mit besonderem Vorteil können einteilige Hülsen mit angegossener hohler Geschoßnachbildung mit z. B. aufplatzbaren und Gase entlassendem Falt-, Prägeverschluß oder dgl. (Manövermunition bzw. Platzpatronen) durch energiereiche Strahlen vernetzt werden.

Die Geschoßnachbildung kann jedoch auch getrennt hergestellt und später in die Hülse aus Polyäthylen eingesetzt werden oder auch abtrennbar ausgebildet sein (Trainingsmunition bzw. ggf. scharfe Munition).

Im allgemeinen wird bei Übungspatronen ein gesondert gefertigtes Bodenstück mit darin angeordnetem Zündelement mit Hilfe einer Rille oder eines Gewindes auf- oder eingesetzt bzw. durch Formschluß gehalten.

Von besonderem Vorteil ist, daß strahlenvernetzte Übungspatronen bei 130°C nicht mehr aufschmelzen. Die strahlenvernetzten Hülsen werden in gewissem Umfang gummielastisch.

Die Erhöhung der Wärmeformbeständigkeit, der Wärmebeständigkeit, des Elastizitätsmoduls oberhalb des kristallinen Schmelzpunktes sowie der Spannungsrißbeständigkeit der Patronenhülsen durch das Strahlenvernetzen bei ausreichender Kaltschlagzähigkeit verbessert die Patroneneigenschaften ganz entscheidend. Vor allem läßt sich die bei Temperaturen des Patronenlagers über 130°C wesentlich formbeständigere und steifere Patrone aus strahlenvernetztem Polyäthylen einwandfrei aus dem heißen Patronenlager ausziehen, ohne daß Reste des Polyäthylens an Teilen der Waffe kleben. Es ist daher möglich, wie bei Übungspatronen aus Metall, die Waffe nach dem Beschuß mit geladener Patrone weiterzuverwenden, so daß die bisherige gründliche Reinigung und ggf. Werkstattarbeiten bei Übungspatronen aus Kunststoffen entfallen.

Die Erfindung ist in der Zeichnung in Ausführungsbeispielen gezeigt und wird anhand dieser nachstehend noch näher erläutert. Es zeigen

Figur 1 einen Längsschnitt durch eine Manöverpatrone,

Figur 2 einen teilweisen Längsschnitt durch eine Trainingspatrone und

Figur 3 eine Variante zu Figur 2.

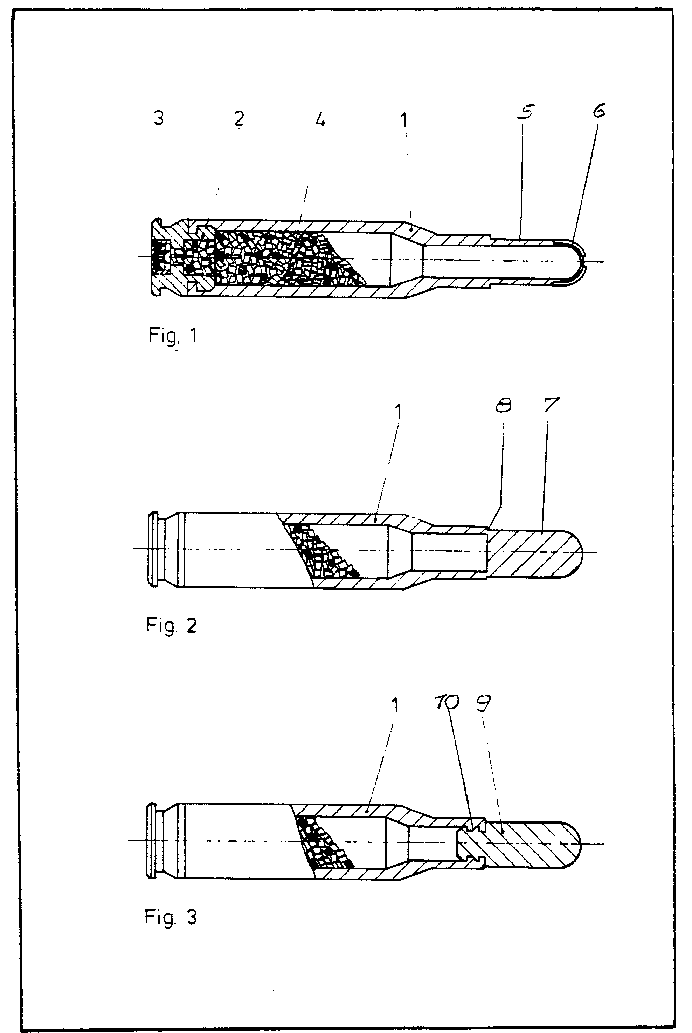

Die in Figur 1 gezeigte Manöver- oder Platzpatrone weist die Hülse 1 aus strahlenvernetztem Polyäthylen auf, in deren hinteres Ende das metallische Bodenstück 2 mit Zündelement 3 eingesetzt ist. In der Hülse 1 befindet sich das Treibladungspulver 4. Am vorderen Ende ist die Hülse 1 mit der einstückig angespritzten hohlen Geschoßnachbildung 5 versehen, die ihrerseits am vorderen Ende Sollbruchkerben 6 aufweist, entlang derer sie beim Schuß unter der Wirkung der Pulvergase aufreißt, ohne daß Stücke von ihr abgerissen werden.

Die Trainings-Patrone gemäß Figur 2 unterscheidet sich von der in Figur 1 nur dadurch, daß an das vordere Ende der Hülse 1 eine massive Geschoßnachbildung 7 einstückig angeformt ist, die beim Schuß entlang der Sollbruchlinie 8 abgetrennt und als Leichtgeschoß durch den Lauf der nicht gezeigten Waffe getrieben wird.

Die Trainings-Patrone gemäß Figur 3 unterscheidet sich hiervon wiederum nur dadurch, daß die Geschoßnachbildung 9 separat hergestellt und über die Schnappverbindung 10 mit der Hülse 1 verbunden ist.

Zur weiteren Erläuterung dienen die beiden nachfolgenden Beispiele:

**Beispiel 1:**

Die Hülsen für das Kaliber 7,62 mm werden auf einer handelsüblichen Schneckenspritzmaschine mit einem Druck von bis zu 2000 bar und einer Massetemperatur von etwa 300°C in eine wassergekühlte Mehrfachform gespritzt.

Diese Hülsen werden dann erfindungsgemäß bei Raumtemperatur mit einer Dosis von 5 - 50 Mrad, vorzugsweise 8 - 12 Mrad elektronenstrahlvernetzt. Nach Einfüllen des Treibladungspulvers und Verschließen des offenen Endes der Hülse durch Einschnappen des Bodenstückes mit dem Zündelement sind die Patronen fertig. Diese Patronen können nach dem Schuß aus Waffen mit Lagertemperaturen bis zu 240°C ohne Kleben wieder entfernt werden.

**Beispiel 2** (Vergleichsbeispiel)

Eine Patrone mit unvernetzter Hülse aus dem gleichen Polyäthylen klebt bereits bei Lagertemperaturen von 130°C, fließt in Hinterschneidungen des Lagers und läßt sich nur mit Werkzeugen unter Zerstörung entfernen.

**Patentansprüche**

1. Patronen oder deren Elemente, insbesondere Übungspatronen aus vernetztem Polyäthylen, dadurch gekennzeichnet, daß sie aus mit energiereichen Strahlen, vorzugsweise Elektronenstrahlen, vernetztem Polyäthylen sind.

2. Verfahren zur Herstellung von Patronen oder deren Elementen durch Spritzgießen oder dgl. aus vernetztem Polyäthylen nach Anspruch 1, dadurch gekennzeichnet, daß sie durch Bestrahlen mit energiereichen Strahlen, vorzugsweise Elektronenstrahlen, vernetzt werden.

**Claims**

1. Cartridges or elements thereof, in particular training cartridges of cross-linked polyethylene, characterised in that they are formed of polyethylene cross-linked with energy rich radiation, preferably an electron radiation.

2. Process for the production of cartridges or elements thereof by injection moulding or the like from cross-linked polyethylene according to claim 1, characterised in that they are cross-linked by irradiation with energy rich radiation, preferably electron radiation.

**Revendications**

1. Cartouches ou leurs éléments, en particulier cartouches d'exercice en polyéthylène réticulé, caractérisées en ce qu'elles sont constituées par un polyéthylène réticulé au moyen de faisceaux riches en énergie, de préférence des faisceaux électroniques.

2. Procédé pour la fabrication de cartouches ou de leurs éléments, par moulage par injection ou autre, à partir de polyéthylène selon la revendication 1, caractérisé en ce qu'elles ont été réticulées par irradiation avec des faisceaux riches en énergie, de préférence ce des faisceaux électroniques.

Fig. 1

Fig. 2

Fig. 3